# EUROPEAN PATENT APPLICATION

(11) **EP 4 635 591 A1**
(43) Date of publication of application: **22.10.2025**
(21) Application number: 25169056.6
(22) Date of filing: 08.04.2025
(51) Int. Cl.: B01D 11/04, G01N 21/00, G01N 21/01

(54) **COLOR-BASED AUTOMATIC OPERATION CONTROL SYSTEM AND CONTROL METHOD FOR LITHIUM ION BATTERY CONTINUOUS MULTI-STAGE SOLVENT EXTRACTION DEVICE**

(30) Priority: 17.04.2024 KR 20240051643
(71) Applicant: Korea Institute of Geoscience and Mineral Resources (KIGAM), Daejeon 34132 (KR)
(72) Inventor: Kim, Hong In, 34050 Daejeon (KR); Shim, Hyun-Woo, 17055 Gyeonggi-do (KR); Je, Jinyoung, 34125 Daejeon (KR)
(74) Representative: Witte, Weller & Partner Patentanwälte mbB

(57) **Abstract**

An object of the present disclosure is to provide a color-based automatic operation control system and control method for a lithium-ion battery continuous multi-stage solvent extraction device, which stably maintains the operation state of solvent extraction by utilizing color differences present in the organic phase solution and the aqueous phase solution depending on the type of valuable metal.

To achieve the above object, a color-based automatic operation control system for a lithium-ion battery continuous multi-stage solvent extraction device according to an exemplary embodiment of the present disclosure includes: a continuous multi-stage solvent extraction device configured to extract a target metal by utilizing color differences present in the organic phase solution and the aqueous phase solution depending on the type of valuable metal; and a server configured to maintain the safety of the operation state by analyzing the color detected from the continuous multi-stage solvent extraction device.

## Description

### CROSS-REFERENCE TO RELATED APPLICATION

This application claims priority to Korean Patent Application No. 10-2024-0051643 filed on April 17, 2024, the contents of which is incorporated by reference in its entirety.

### BACKGROUND OF THE DISCLOSURE

### 1. Field of the Disclosure

The present disclosure relates to a color-based automatic operation control system and control method. In particular, the present disclosure relates to a color-based automatic operation control system and control method for a lithium-ion battery continuous multi-stage solvent extraction device.

### 2. Description of the Related Art

Solvent extraction technology is a separation process that transfers specific compounds or components from one liquid phase to another.

This technique utilizes two immiscible liquids. In general, one is a polar solvent like water and the other is a non-polar solvent such as an organic solvent.

For example, a target metal (e.g., Co, Ni) can be selectively extracted by utilizing the ion exchange properties between H+ ions of the extractant and the ions of the target metal.

The fundamental principle of the solvent extraction is based on the distribution law.

That is, a specific compound tends to reach equilibrium between two immiscible liquid phases.

The concentration ratio of the compound in each solvent is related to its solubility in the respective solvents, and this ratio is referred to as the distribution coefficient (K).

The target compound moves from one solvent (e.g., water) to another (e.g., an organic solvent), and this process is most efficient when the compound is more soluble in the other solvent.

This solvent extraction process involves the steps of contacting, separating, and recovering.

Contacting involves mixing the two liquid phases, which are the solvent containing the feed and the organic solvent that extracts the target compound.

At this stage, the target compound moves from the original liquid phase to the extractant.

Separation occurs after mixing, where the two liquids naturally separate due to differences in density or the effect of gravity.

Since water and organic solvents are generally immiscible, they form two distinct layers.

Recovery involves collecting the solvent layer (extract phase) that contains the target compound.

The target compound in this layer can then be further purified or concentrated through additional processes.

Continuous multi-stage solvent extraction repeats the extraction process over multiple stages in sequence, enabling higher purity and recovery rates. Such continuous multi-stage solvent extraction is performed in a continuous multi-stage solvent extraction device.

However, the operation of the above-mentioned continuous multi-stage solvent extraction device is typically performed by skilled operators, and the condition of each stage is empirically inferred based on the operator's know-how.

In other words, the empirical inference relies on visual estimation of color and quantitative analysis through concentration measurements, which may lead to human error.

### Related Patent Document

Korean Patent No. 10-2112573

### SUMMARY OF THE DISCLOSURE

The purpose of the present disclosure, which aims to solve the aforementioned conventional problems, is to provide a color-based automatic operation control system and control method for a lithium-ion battery continuous multi-stage solvent extraction device, which stably maintains the operation state of solvent extraction by utilizing color differences present in organic and aqueous phase solutions depending on the type of valuable metal, thereby solving the aforementioned conventional problems.

In order to achieve the purpose, an aspect of the present disclosure provides a color-based automatic operation control system for a lithium-ion battery continuous multi-stage solvent extraction device, the system comprising:
a continuous multi-stage solvent extraction device configured to extract a target metal by utilizing a color difference present in an organic phase solution and an aqueous phase solution depending on valuable metals; and
a server configured to maintain safety of operation state by analyzing a color detected from the continuous multi-stage solvent extraction device.

In some exemplary embodiment, the system may further comprise:
a color sensor configured to sense a current color at each stage of the continuous multi-stage solvent extraction device and to convert the sensed color into an RGB code.

In some exemplary embodiment, the server may include:
a correction unit configured to perform correction on one or more of mixed-settling tank frame color, background color, light reflection, or a combination thereof, in order to process an image based on the converted RGB code.

In some exemplary embodiment, the server may include:
a configuration unit configured to set a normal operation condition range based on the RGB code.

In some exemplary embodiment, the server may include:
an image processing unit configured to process an image based on the RGB code; and
a monitoring unit configured to perform monitoring through pattern recognition from the image processed by the image processing unit.

In some exemplary embodiment, the server may include:
a control unit configured to control an operation condition in order to maintain the safety of the operation state of the continuous multi-stage solvent extraction device.

In addition, in order to achieve the purpose, another aspect of the present disclosure provides a color-based automatic operation control method for a lithium-ion battery continuous multi-stage solvent extraction device, the method comprising:
a first step of sensing a current color at each stage of a continuous multi-stage solvent extraction device by a color sensor and converting the sensed color into an RGB code, in order to extract a target metal by utilizing a color difference present in an organic phase solution and an aqueous phase solution depending on valuable metals;
a second step of setting, by a configuration unit of a server, a normal operation condition range based on the converted RGB code;
a third step of processing, by an image processing unit of the server, an image based on the RGB code; and
a fourth step of performing, by a monitoring unit of the server, monitoring through pattern recognition from the processed image.

In some exemplary embodiment, in order to process an image based on the converted RGB code, a correction may be performed, by a correction unit of the server, on one or more of mixed-settling tank frame color, background color, light reflection, or a combination thereof.

In some exemplary embodiment, in order to maintain safety of operation state of the continuous multi-stage solvent extraction device, an operation condition may be controlled, by a control unit of the server.

Meanwhile, in order to achieve the purpose, the color-based automatic operation control system for a lithium-ion battery continuous multi-stage solvent extraction device may perform the color-based automatic operation control method for a lithium-ion battery continuous multi-stage solvent extraction device according to the present disclosure.

Specific details of other exemplary embodiments are included in "Details for carrying out the invention" and accompanying "drawings".

Advantages and/or features of the present disclosure, and a method for achieving the advantages and/or features will become obvious with reference to various exemplary embodiments to be described below in detail together with the accompanying drawings.

However, the present disclosure is not limited only to a configuration of each exemplary embodiment disclosed below, but may also be implemented in various different forms. The respective exemplary embodiments disclosed in this specification are provided only to complete disclosure of the present disclosure and to fully provide those skilled in the art to which the present disclosure pertains with the category of the present disclosure, and the present disclosure will be defined only by the scope of each claim of the claims.

According to the present disclosure, the operation state of solvent extraction can be stably maintained by utilizing color differences present in organic and aqueous phase solutions depending on valuable metals.

### BRIEF DESCRIPTION OF THE DRAWINGS

FIG. 1 is a diagram illustrating the configuration and continuous process of a lithium-ion battery continuous multi-stage solvent extraction device in the color-based automatic operation control system and control method according to the present disclosure.
FIG. 2 is a diagram illustrating a nickel recovery process during the solvent extraction process of a spent lithium secondary battery in the color-based automatic operation control system and control method for a lithium-ion battery continuous multi-stage solvent extraction device according to the present disclosure.
FIG. 3 is a diagram illustrating the overall configuration of the color-based automatic operation control system for a lithium-ion battery continuous multi-stage solvent extraction device according to the present disclosure.
FIG. 4 is a diagram illustrating the configuration of the server in the color-based automatic operation control system for a lithium-ion battery continuous multi-stage solvent extraction device according to the present disclosure.
FIG. 5 is a flowchart illustrating the overall flow of the color-based automatic operation control method for a lithium-ion battery continuous multi-stage solvent extraction device according to the present disclosure.

### DETAILED DESCRIPTION OF THE DISCLOSURE

Before describing the present disclosure in detail, the terms or words used in this specification should not be construed as being unconditionally limited to their ordinary or dictionary meanings, and in order for the inventor of the present disclosure to describe his/her disclosure in the best way, concepts of various terms may be appropriately defined and used, and furthermore, the terms or words should be construed as means and concepts which are consistent with a technical idea of the present disclosure.

That is, the terms used in this specification are only used to describe preferred embodiments of the present disclosure, and are not used for the purpose of specifically limiting the contents of the present disclosure, and it should be noted that the terms are defined by considering various possibilities of the present disclosure.

Further, in this specification, it should be understood that, unless the context clearly indicates otherwise, the expression in the singular may include a plurality of expressions, and similarly, even if it is expressed in plural, it should be understood that the meaning of the singular may be included.

In the case where it is stated throughout this specification that a component "includes" another component, it does not exclude any other component, but may further include any other component unless otherwise indicated.

Furthermore, it should be noted that when it is described that a component "exists in or is connected to" another component, this component may be directly connected or installed in contact with another component, and in inspect to a case where both components are installed spaced apart from each other by a predetermined distance, a third component or means for fixing or connecting the corresponding component to the other component may exist, and the description of the third component or means may be omitted.

On the contrary, when it is described that a component is "directly connected to" or "directly accesses" to another component, it should be understood that the third element or means does not exist.

Similarly, it should be construed that other expressions describing the relationship of the components, that is, expressions such as "between" and "directly between" or "adjacent to" and "directly adjacent to" also have the same purpose.

In addition, it should be noted that if terms such as "one side surface", "other side surface", "one side", "other side", "first", "second", etc., are used in this specification, the terms are used to clearly distinguish one component from the other component and a meaning of the corresponding component is not limited used by the terms.

Further, in this specification, if terms related to locations such as "upper", "lower", "left", "right", etc., are used, it should be understood that the terms indicate a relative location in the drawing with respect to the corresponding component and unless an absolute location is specified for their locations, these location-related terms should not be construed as referring to the absolute location.

Further, in this specification, in specifying the reference numerals for each component of each drawing, the same component has the same reference number even if the component is indicated in different drawings, that is, the same reference number indicates the same component throughout the specification.

In the drawings attached to this specification, a size, a location, a coupling relationship, etc. of each component constituting the present disclosure may be described while being partially exaggerated, reduced, or omitted for sufficiently clearly delivering the spirit of the present disclosure, and thus the proportion or scale may not be exact.

Further, hereinafter, in describing the present disclosure, a detailed description of a configuration determined that may unnecessarily obscure the subject matter of the present disclosure, for example, a detailed description of a known technology including the prior art may be omitted.

Moreover, one or more "unit" described in this specification can be implemented via a non-transitory memory (not shown) and a processor (not shown). The memory is configured to store data concerning algorithms designed to control the operation of system components according to exemplary embodiments of the present invention, or software instructions that implement these algorithms. The processor is configured to perform the operations described below using the data stored in the memory. Here, the memory and the processor may be implemented as separate chips. Alternatively, the memory and the processor may be implemented as a single integrated chip. The processor may take the form of one or more processors.

Hereinafter, exemplary embodiments of the present disclosure will be described in detail with reference to related drawings.

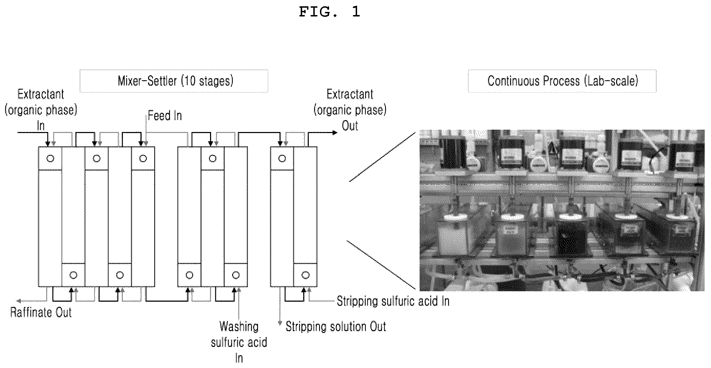

FIG. 1 is a diagram illustrating the configuration and continuous process of a lithium-ion battery continuous multi-stage solvent extraction device in the color-based automatic operation control system and control method according to the present disclosure.

Solvent extraction technology is a technique that selectively extracts a target metal by utilizing the ion exchange properties between H+ ions of the extractant and ions of the target metal (e.g., Co, Ni).

Referring to FIG. 1, for example, in a 10-stage solvent extraction device, color differences are present at each stage depending on the type and concentration of organometallic ions present in the organic phase solution and the aqueous phase solution.

Conventionally, the condition of each stage was empirically inferred based on the know-how of skilled operators.

In other words, the condition was estimated visually through color observation and quantitatively analyzed through concentration analysis.

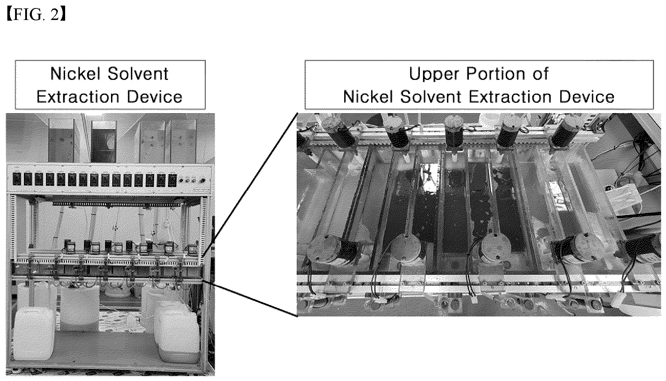

FIG. 2 is a diagram illustrating a nickel recovery process during the solvent extraction process of a spent lithium secondary battery in the color-based automatic operation control system and control method for a lithium-ion battery continuous multi-stage solvent extraction device according to the present disclosure.

Color differences are present in the organic phase solution and the aqueous phase solution depending on valuable metals.

Table 1 shows examples of cobalt and nickel.

**[Table 1]**

| Valuable metal | Organic phase | Aqueous phase |
|---|---|---|
| Co | Blue | Red |
| Ni | Green | Green |

For example, in the case of cobalt, when no water molecules are coordinated (i.e., in the organic phase solution), it appears blue; however, when it binds with water molecules (i.e., in the aqueous phase solution), it appears red.

Similarly, in the case of nickel, it appears green in both the organic phase solution and the aqueous phase solution.

Referring to FIG. 2, the nickel recovery process during the solvent extraction of a spent lithium-ion battery (NCM ternary system) can be observed.

When the multi-stage solvent extraction device is operating normally, the Raffinate, which is the remaining phase after most or all of target components have been extracted, appears transparent, while the stripping solution appears dark green.

Therefore, when the color of the Raffinate becomes green, the feed flow rate of the mixture to be extracted is decreased or the flow rate of the extractant is increased.

In addition, when the color of the fourth extraction stage appears transparent, the feed flow rate is increased or the flow rate of the extractant is decreased.

However, in conventional arts, such decisions have been made visually with naked eyes by skilled operators.

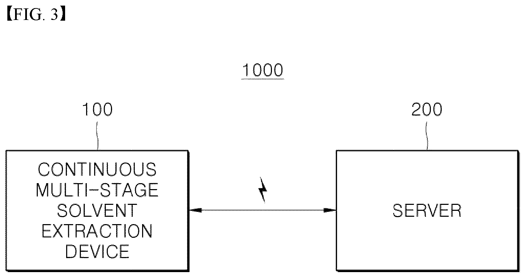

FIG. 3 is a diagram illustrating the overall configuration of the color-based automatic operation control system for a lithium-ion battery continuous multi-stage solvent extraction device according to the present disclosure.

Referring to FIG. 3, the color-based automatic operation control system 1000 for a lithium-ion battery continuous multi-stage solvent extraction device according to an exemplary embodiment of the present disclosure includes a continuous multi-stage solvent extraction device 100 and a server 200.

The continuous multi-stage solvent extraction device 100 is a device that extracts a target metal by utilizing color differences present in the organic phase solution and the aqueous phase solution depending on the type of valuable metal.

The continuous multi-stage solvent extraction device 100 performs multiple extraction stages in sequence and is used to extract and purify a desired target metal more efficiently.

The continuous multi-stage solvent extraction device 100 is particularly useful for selectively separating specific components from complex mixtures.

The basic principle of the continuous multi-stage solvent extraction device 100 is based on equilibrium at each stage.

During the extraction process, the component to be extracted moves between two phases (generally, an aqueous phase and an organic phase) by reaching equilibrium.

The multi-stage extraction device maximizes the recovery rate of the desired component by repeating this equilibrium process multiple times.

The configuration of the continuous multi-stage solvent extraction device 100 may include a feed tank, an extractor, a solvent tank, a mixer-settler, a reflux device, and product and waste tanks.

The feed tank stores the mixture and serves as the starting point of the extraction process.

The extractor includes multiple separated chambers, each of which allows the desired component to be extracted by the solvent. These chambers are typically arranged in layers.

The solvent tank stores the solvent used in the extraction.

The mixer-settler is a device that agitates the mixture at each stage to allow contact with the solvent and subsequently separates the phases.

The reflux device increases extraction efficiency by returning a portion of the solvent to an earlier stage.

The product and waste tanks store the extracted pure product and the waste (solvent containing impurities), respectively.

The operation of the continuous multi-stage solvent extraction device 100 generally proceeds in the following steps: feed preparation, extraction initiation, separation, multi-stage processing, and recovery and recycling.

The feed preparation involves preparing the initial mixture in the feed tank.

The extraction initiation begins by injecting the solvent into the feed and agitating the mixture in the mixer to ensure sufficient contact between the solvent and the desired component.

The separation occurs when the mixed solution is transferred from the mixer to the settler, where it naturally separates into a heavier aqueous phase and a lighter organic phase.

The multi-stage processing refers to the process in which the separated organic phase is transferred to the next stage, mixed with fresh solvent, and the process is repeated across multiple stages.

Each stage is designed to yield a product of higher purity.

The recovery and recycling involve transferring the final extracted product to the product tank and recycling a portion of the solvent to improve overall efficiency.

This continuous multi-stage solvent extraction method is critical for selectively separating and purifying specific components from complex mixtures.

The process proceeds through multiple stages. **In** each of the multiple stages, the components repeatedly come into contact with the solvent, allowing the desired component to transfer into the solvent.

The term "multi-stage" means that the extraction process is repeated multiple times.

The basic principle of continuous multi-stage solvent extraction is based on the transfer of a solute (the component to be extracted) between two immiscible liquid phases (an aqueous phase and an organic phase). This process is governed by Nernst's law, according to which the equilibrium distribution of the solute between the two phases is determined by the distribution coefficient of the solute in each phase.

That is, the concentration ratio of the solute in each phase remains constant at a given temperature.

The server 200 maintains the safety of the operation state of the continuous multi-stage solvent extraction device 100 by analyzing the color detected from the continuous multi-stage solvent extraction device 100.

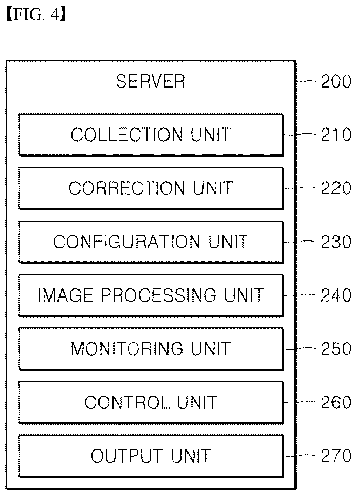

The configuration of the server 200 will be described in more detail with reference to FIG. 4.

Here, the continuous multi-stage solvent extraction device 100 may include a color sensor.

The color sensor senses the current color at each stage of the continuous multi-stage solvent extraction device 100, converts the sensed color into an RGB code, and transmits the code to the server 200.

Here, the color sensor may transmit data to the server 200 via wired or wireless communication.

In particular, the wireless communication may include a wireless communication module that supports various wireless communication methods such as Bluetooth, Wi-Fi, Wireless Broadband (WiBro), GSM (Global System for Mobile Communications), CDMA (Code Division Multiple Access), WCDMA (Wideband Code Division Multiple Access), UMTS (Universal Mobile Telecommunications System), TDMA (Time Division Multiple Access), and LTE (Long Term Evolution).

FIG. 4 is a diagram illustrating the configuration of the server in the color-based automatic operation control system for a lithium-ion battery continuous multi-stage solvent extraction device according to the present disclosure.

Referring to FIG. 4, in the color-based automatic operation control system 1000 for a lithium-ion battery continuous multi-stage solvent extraction device according to the present disclosure, the server 200 includes a collection unit 210, a correction unit 220, a configuration unit 230, an image processing unit 240, a monitoring unit 250, a control unit 260, and an output unit 270.

In the continuous multi-stage solvent extraction device 100, color differences exist in the organic phase solution and the aqueous phase solution depending on the type of valuable metal.

The color sensor detects the current color of the solution as an electrical signal.

The current status of each stage of the continuous multi-stage solvent extraction device 100 may be converted into a color (RGB code) and transmitted as a computer signal.

The collection unit 210 receives the RGB code converted by the color sensor via computer signals. The color sensor senses the current status of each stage of the continuous multi-stage solvent extraction device (100) and converts it into an RGB code.

The correction unit 220 performs correction for one or more of the mixed-settling tank frame color, background color, light reflection, or a combination thereof, in order to process an image based on the RGB code received from the collection unit 210.

Here, the mixed-settling tank frame color, background color, and light reflection are critical elements in image processing.

The frame color of the mixed-settling tank refers to the physical color of the frame. I It is essential to accurately identifying this color for distinguishing the mixed-settling tank frame color from other colors detected by the color sensor.

The background color refers to the color surrounding the mixed-settling tank. Since the background color can influence data of the color sensor, the background color must be identified and excluded.

Light reflection occurs when artificial or natural light reflects off the mixed-settling tank or surrounding objects, reaching the color sensor and affecting the color that the color sensor recognizes. Therefore, it is also necessary to accurately identify the reflections and perform correction.

Correction methods may include white balance adjustment, color space transformation, background removal, reflection removal, dynamic range adjustment, color profiling, and adaptive correction using machine learning.

White balance adjustment corrects the white balance according to color temperature, allowing each RGB channel to more accurately represent the true color.

Color space transformation involves converting the RGB color space into other color spaces.

For example, HSV (Hue, Saturation, Value) or LAB color spaces allow for separate processing of hue, saturation, and brightness, enabling more advanced color correction.

Background removal may use segmentation algorithms to remove the background from the image. This separates the object from the background to allow the sensor to recognize only the target color.

Reflection removal can be performed by using polarizing filters or software-based correction that identifies and compensates for reflected regions.

Dynamic range adjustment prevents overexposure or underexposure by adjusting the sensor's dynamic range.

This may help to improve color recognition accuracy under changing lighting conditions.

Color profiling involves creating a color profile using a reference color card or standard, then correcting sensor data based on this profile under actual operating conditions.

Adaptive correction using machine learning enables automatic recognition and correction of color variations in sensor data by using machine learning algorithms.

These correction methods play a vital role in improving the accuracy of color sensor data in the continuous multi-stage solvent extraction device.

Proper correction enhances the reliability of color-based process monitoring and control systems, ultimately contributing to improved production efficiency and product quality.

The configuration unit 230 sets a normal operation condition range based on the RGB code.

The configuration unit 230 compares the current RGB code of each stage with the normal operation condition range.

In addition, the configuration unit 230 determines whether each stage of the continuous multi-stage solvent extraction device 100 is operating normally. When abnormal operation is detected, the configuration unit 230 adjusts the operation conditions accordingly.

In the continuous multi-stage solvent extraction system 1000, setting the normal operation condition range by converting the status of each stage into an RGB code may generally be based on empirical data, operational standards, or experimental results.

The color representing the status of each stage may be affected by various factors such as the concentration of chemicals, mixing state, and temperature at that stage.

Therefore, in order to define the normal operation condition range, the following methods may be applied:
Reference color determination: The initial reference color is measured when the device is operating under normal conditions.

This reference point represents the color of the extract or mixture under specific operating conditions.

Setting a variation range: The natural color variation range during normal operation is observed and used to define the acceptable range of color fluctuations under stable conditions.

Statistical method: The normal range may be determined through statistical analysis of color data.

For example, the range can be defined as the mean ± standard deviation of the collected color values.

Continuous monitoring and data collection: The RGB code values are continuously monitored and collected to analyze their distribution within the normal operating range.

Adjustment according to changes in operating conditions: Changes in temperature, pressure, and concentration can influence the RGB code.

The normal range can be adjusted based on how the RGB values shift in response to such changes.

Application of the normal range: Real-time data is compared against the defined range.

When the current value deviates from the range, an alert system may be triggered to notify the operator.

For example, the RGB code range for normal operation conditions may be defined as follows:
That is, ranges such as #90C3D4 to #A1D7E2 (representing a blue hue of a specific extractant) or #6C8EAD to #7BA1BF (representing a gray-blue hue of another extractant) indicate the RGB values corresponding to specific colors.

During normal extraction processes, the RGB values should remain within these defined ranges.

When the values fall outside the specified range, the system recognizes the operational condition as abnormal and initiates appropriate corrective actions.

The image processing unit 240 processes images based on the RGB code.

The monitoring unit 250 performs monitoring through pattern recognition from the images processed by the image processing unit 240.

In the continuous multi-stage solvent extraction system 1000, processing images sensed by the color sensor and monitoring through pattern recognition are crucial for real-time observation of the device's status using color data and for improving the efficiency of the extraction process.

This is carried out through the following steps: image capture and preprocessing, color correction and standardization, feature extraction, pattern recognition and classification, result interpretation and monitoring, and feedback and optimization.

In the image capture and preprocessing steps, in the step of capture, the color sensor captures the current condition of each stage in the continuous multi-stage solvent extraction system 1000 as an RGB color image.

In the step of preprocessing, the captured image undergoes processes such as noise reduction, color correction, and contrast adjustment.

At this stage, correction algorithms can be applied to minimize the effects of environmental factors like lighting changes.

In the steps of color correction and standardization, for example, white balance is adjusted so that the colors sensed in the image match the actual colors of the device.

Through color profiling, the color profile of each image is calibrated by comparing the color profiles to the reference color values of the extraction device.

In the feature extraction stage, color space conversion is used to convert RGB images into other color spaces such as HSV or CIE LAB, which better highlight certain color features.

Edge detection is applied to detect boundaries in the image and analyze the condition of each extraction stage.

Texture analysis helps recognize different internal states of the system (e.g., mixing or separation) by analyzing the surface pattern in the image.

In pattern recognition and classification, pattern recognition algorithms (e.g., support vector machines, neural networks) use predefined features to detect patterns in the image.

Classification models based on machine learning are used to identify and categorize the state of each extraction stage.

These models are trained using historical data to recognize what each condition looks like.

In result interpretation and monitoring, the classified results are analyzed to assess the condition of the extraction process at each stage.

A dashboard displays real-time monitoring data, including extraction status, potential issues, and operational efficiency.

An alert system can notify the operator if any abnormal condition is detected.

In feedback and optimization, a feedback loop uses the results from image processing and pattern recognition to fine-tune and optimize the extraction process.

Continuous learning allows the system to improve performance over time by learning from new data and updating its models.

In particular, based on the configuration in which color differences exist in the organic phase solution and the aqueous phase solution depending on the type of valuable metal, and the configuration in which the current color of the solution is detected as an electrical signal through a color sensor, the system identifies the type and presence of valuable metals contained in the organic and aqueous phases at each stage.

Furthermore, the system can estimate the concentration of valuable metals in the solution by analyzing the color differences that correspond to varying concentrations.

That is, the higher the concentration, the darker the color appears.

The control unit 260 controls the operation conditions in order to maintain the safety of the operation state of the continuous multi-stage solvent extraction device 100.

More specifically, the control unit 260 determines a control method to maintain stable operation and adjusts the operation conditions accordingly.

The control method may involve regulating the flow rates of the feed, extractant, washing solution, and stripping solution.

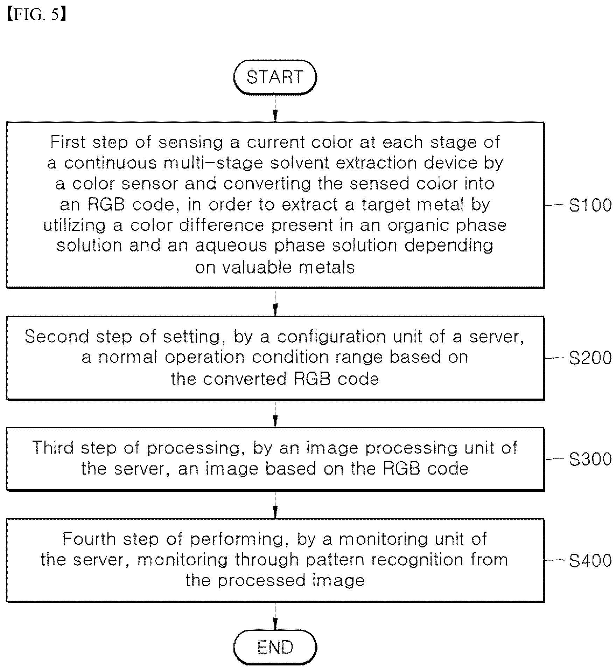

FIG. 5 is a flowchart illustrating the overall flow of the color-based automatic operation control method for a lithium-ion battery continuous multi-stage solvent extraction device according to the present disclosure.

Referring to FIG. 5, the color-based automatic operation control method for a lithium-ion battery continuous multi-stage solvent extraction device according to the present disclosure may include four steps.

In Step 1 (S100), in order to extract a target metal by utilizing color differences present in the organic phase solution and aqueous phase solution depending on the type of valuable metal, a color sensor senses the current color of each stage of the continuous multi-stage solvent extraction device 100 and converts it into an RGB code.

In Step 2 (S200), based on the RGB code converted by the color sensor, the configuration unit 230 of the server 200 sets a normal operation condition range.

In Step 3 (S300), based on the RGB code, the image processing unit 240 of the server 200 processes the image.

In Step 4 (S400), the monitoring unit 250 of the server 200 performs monitoring through pattern recognition based on the processed image.

In addition, in order to process the converted RGB code, the correction unit 220 of the server 200 performs correction for one or more of the mixed-settling tank frame color, background color, light reflection, or a combination thereof.

Furthermore, in order to maintain the safety of the operation state of the continuous multi-stage solvent extraction device 100, the control unit 260 of the server 200 controls the operation conditions.

Meanwhile, the color-based automatic operation control system 1000 for a lithium-ion battery continuous multi-stage solvent extraction device according to the present disclosure may be performed based on the color-based automatic operation control method of the continuous multi-stage solvent extraction device 100 as described above.

As described above, according to the present disclosure, the operation state of solvent extraction can be stably maintained by utilizing color differences present in the organic phase solution and the aqueous phase solution depending on the type of valuable metal.

In the above, although several preferred embodiments of the present disclosure have been described with some examples, the descriptions of various exemplary embodiments described in the "Specific Content for Carrying Out the Invention" item are merely exemplary, and it will be appreciated by those skilled in the art that the present disclosure can be variously modified and carried out or equivalent executions to the present disclosure can be performed from the above description.

In addition, since the present disclosure can be implemented in various other forms, the present disclosure is not limited by the above description, and the above description is for the purpose of completing the disclosure of the present disclosure, and the above description is just provided to completely inform those skilled in the art of the scope of the present disclosure, and it should be known that the present disclosure is only defined by each of the claims.

### List of Reference numbers

100 : continuous multi-stage solvent extraction device
200 : server
210 : collection unit
220 : correction unit
230 : configuration unit
240 : image processing unit
250 : monitoring unit
260 : control unit
270 : output unit
1000 : color-based automatic operation control system for lithium-ion battery continuous multi-stage solvent extraction device

## Claims

1. A color-based automatic operation control system for a lithium-ion battery continuous multi-stage solvent extraction device, the system comprising:
a continuous multi-stage solvent extraction device configured to extract a target metal by utilizing a color difference present in an organic phase solution and an aqueous phase solution depending on valuable metals; and
a server configured to maintain safety of operation state by analyzing a color detected from the continuous multi-stage solvent extraction device.

2. The system of claim 1, further comprising:
a color sensor configured to sense a current color at each stage of the continuous multi-stage solvent extraction device and to convert the sensed color into an RGB code.

3. The system of claim 2,
wherein the server includes:
a correction unit configured to perform correction on one or more of mixed-settling tank frame color, background color, light reflection, or a combination thereof, in order to process an image based on the converted RGB code.

4. The system of claim 2,
wherein the server includes:
a configuration unit configured to set a normal operation condition range based on the RGB code.

5. The system of claim 2,
wherein the server includes:
an image processing unit configured to process an image based on the RGB code; and
a monitoring unit configured to perform monitoring through pattern recognition from the image processed by the image processing unit.

6. The system of claim 2,
wherein the server includes:
a control unit configured to control an operation condition in order to maintain the safety of the operation state of the continuous multi-stage solvent extraction device.

7. A color-based automatic operation control method for a lithium-ion battery continuous multi-stage solvent extraction device, the method comprising:
a first step of sensing a current color at each stage of a continuous multi-stage solvent extraction device by a color sensor and converting the sensed color into an RGB code, in order to extract a target metal by utilizing a color difference present in an organic phase solution and an aqueous phase solution depending on valuable metals;
a second step of setting, by a configuration unit of a server, a normal operation condition range based on the converted RGB code;
a third step of processing, by an image processing unit of the server, an image based on the RGB code; and
a fourth step of performing, by a monitoring unit of the server, monitoring through pattern recognition from the processed image.

8. The method of claim 7,
wherein, in order to process an image based on the converted RGB code, a correction is performed, by a correction unit of the server, on one or more of mixed-settling tank frame color, background color, light reflection, or a combination thereof.

9. The method of claim 7,
wherein, in order to maintain safety of operation state of the continuous multi-stage solvent extraction device, an operation condition is controlled, by a control unit of the server.

10. A color-based automatic operation control system for a lithium-ion battery continuous multi-stage solvent extraction device,
wherein the system is configured to perform the color-based automatic operation control method for a lithium-ion battery continuous multi-stage solvent extraction device according to any one of claims 7 to 9.
